# EUROPÄISCHE PATENTSCHRIFT

(11) **EP 3 683 479 B1**
(45) Veröffentlichungstag und Bekanntmachung des Hinweises auf die Patenterteilung: **24.02.2021**
(21) Anmeldenummer: 19151967.7
(22) Anmeldetag: 15.01.2019
(51) Int. Cl.: F16K 37/00

(54) **STELLSYSTEM FÜR EIN VENTIL**
POSITIONING SYSTEM FOR A VALVE
SYSTÈME DE RÉGLAGE POUR UNE SOUPAPE

(43) Veröffentlichungstag der Anmeldung: 22.07.2020
(73) Patentinhaber: Contelec AG, 2503 Biel/Bienne (CH)
(72) Erfinder: Amstutz, Meric, CH-2562 Port (CH)
(74) Vertreter: Jakelski & Althoff Patentanwälte PartG mbB

(56) Entgegenhaltungen:
- EP-A1- 1 422 452
- DE-U1-202006 012 959
- US-A1- 2015 377 383

## Beschreibung

### Stellsystem für ein Ventil

Die vorliegende Erfindung betrifft ein Stellsystem für ein Ventil. Weiterhin betrifft sie ein Ventil, welches das Stellsystem aufweist.

### Stand der Technik

Stellsysteme wie beispielsweise pneumatisch betätigte Stellventile mit einfach oder doppelt wirkenden Antrieben können mithilfe einer Mikroprozessorelektronik die Stellung des Ventils regeln. Hierzu wird ein Wegaufnehmer benötigt, der die aktuelle Position des Ventils misst. Diese wird dann kontinuierlich mit einem vorgegebenen Stellungssollwert verglichen und bei Vorliegen einer Regeldifferenz wird eine Korrektur der Istposition des Ventils herbeigeführt.

Zum kontaktfreien Messen der aktuellen Position können ein oder mehrere Magnete in einer Schaltspindel des Ventils angeordnet sein. Beispielsweise wird in der DE 20 2006 012 959 U1 ein Ventil beschrieben, in dessen Schaltspindel zwei durch eine Feder getrennte Magnete so angeordnet sind, dass ihre Position mittels Hall-Sensoren des Stellsystems detektiert werden kann. Hierzu ist es allerdings erforderlich, dass die Schaltspindel bereits bei der Herstellung des Ventils zur Aufnahme der Magnete eingerichtet und mit diesen versehen wird. Außerdem ist diese Lösung empfindlich gegenüber magnetischen Störfeldern.

Oftmals ist in den Anlagen allerdings ein Ventil verbaut, dessen Schaltspindel keinen Magneten oder ein ähnliches Element aufweist, das als Positionsgeber für einen Wegaufnehmer fungieren kann. Wenn ein solches Ventil mit einem Stellsystem nachgerüstet werden soll, dann ist es erforderlich, es mit einem Positionsgeber zu versehen. Hierzu kann beispielsweise ein scheibenförmiger Positionsgeber, der eine Spule und einen Kondensator enthält, mittels eines Verbindungsteils an einer Seite der Schaltspindel befestigt werden. Er fungiert dann als aktiver Positionsgeber mit Resonator bzw. Schwingkreis. Hierzu ist es allerdings erforderlich, dass er während der Montage korrekt ausgerichtet wird. Ob eine korrekte Einbauposition erreicht wurde, kann nicht direkt kontrolliert werden, weil beim Einführen des Positionsgebers in das Stellsystem keine Sicht auf diesen möglich ist. Eine fehlerhafte Montage kann dann erst indirekt über eine fehlerhafte Funktion des Stellsystems erkannt werden.

Die EP 1 422 452 A1 offenbart ein System zum Erfassen des Endes einer Bewegung eines Verschlusses eines Ventils. Hierzu sind an einer Schaltspindel des Ventils ein oder zwei Positionsgeber angeordnet, deren Bewegung jeweils mittels eines magnetoresistiven Sensors erfasst werden kann.

Es ist eine Aufgabe der vorliegenden Erfindung, ein Stellsystem für ein Ventil bereitzustellen, welches nicht nur bei der Herstellung des Ventils an diesem angebracht werden kann, sondern das auch als Nachrüstlösung geeignet ist. Das Stellsystem soll so ausgeführt sein, dass es nicht zu einer falschen Ausrichtung seines Positionsgebers bei der Montage kommen kann und dass es gegenüber magnetischen Störfeldern unempfindlich ist, wie sie beispielsweise durch ein Magnetventil oder einen Stellmotor hervorgerufen werden können. Eine weitere Aufgabe der Erfindung besteht darin, ein Ventil bereitzustellen, welches ein derartiges Stellsystem aufweist.

### Offenbarung der Erfindung

Diese Aufgabe wird in einem Aspekt der Erfindung durch ein Stellsystem für ein Ventil gelöst, insbesondere für ein Stetigventil gelöst, das beispielsweise als Stellventil verwendet werden kann. Dieses weist ein äußeres Gehäuse auf. In dem äußeren Gehäuse verläuft ein Aufnahmebereich zur Aufnahme einer Schaltspindel des Ventils. Unter einem Aufnahmebereich wird dabei jeder freie Raum im äußeren Gehäuse verstanden, der hinsichtlich seiner Position und seiner Abmessungen dazu geeignet ist, die Schaltspindel aufzunehmen. Es ist nicht erforderlich, dass der Aufnahmebereich begrenzt ist. Vielmehr kann es sich auch um einen Teilbereich eines größeren Freiraums im äußeren Gehäuse handeln. Parallel zu dem Aufnahmebereich verläuft mindestens ein induktiver Sensor. Dieser fungiert als Wegaufnehmer des Stellsystems.

Weiterhin umfasst das Stellsystem mindestens einen im Wesentlichen kreiszylinderförmigen Positionsgeber. Dieser weist ein elektrisch leitfähiges Material auf. Entlang seiner Längsachse verläuft ein Kanal, der zur Aufnahme der Schaltspindel des Ventils eingerichtet ist. Der Positionsgeber ist nicht fest mit den anderen Teilen des Stellsystems verbunden. Wenn das Stellsystem eine Nachrüstlösung für ein bereits vorhandenes Ventil darstellt, dann kann dieser vielmehr als Einzelteil ausgeführt sein, das an der Schaltspindel angebracht wird, indem diese durch den Kanal hindurchgeführt wird. Anschließend kann die Schaltspindel mit samt des Positionsgebers in das äußere Gehäuse eingeführt werden. Eine Bewegung der Schaltspindel parallel zum induktiven Sensor kann dann durch die Anwesenheit des elektrisch leitfähigen Materials im Positionsgeber induktiv gemessen werden. Unter elektrisch leitfähig werden dabei alle Materialien verstanden, deren elektrische Leitfähigkeit bei einer Temperatur von 25°C mehr als 10⁶ S/m beträgt. Insbesondere sind Kupfer und/oder Aluminium als leitfähiges Material geeignet.

Die Kreiszylinderform des Positionsgebers bewirkt, dass dieser rotationssymmetrisch zur Schaltspindel ist. Er kann deshalb bei der Montage beliebig gegenüber der Schaltspindel verdreht werden, ohne dass es zu einer Fehljustierung kommen kann. Auch ein Verdrehen des äußeren Gehäuses mit dem darin angeordneten induktiven Sensor gegenüber der Schaltspindel wird zu keiner Fehljustierung führen.

Der Positionsgeber besteht aus mehreren Teilen. Hierbei weist er ein Geberteil auf. Dieses ermöglicht die induktive Positionsbestimmung der Schaltspindel. Durch das Geberteil ist entlang seiner Längsachse ein Verbindungsteil hindurchgeführt. Dieses umgibt den Kanal und weist mindestens ein Eingreifelement auf. Mittels des Eingreifelements kann das Verbindungsteil an der Schaltspindel fixiert werden, indem dieses in die Schaltspindel eingreift. Damit wird ein Verrutschen des Positionsgebers entlang der Schaltspindel verhindert. Das Verbindungsteil besteht vorzugsweise aus einem Kunststoff, so dass es nicht mit dem induktiven Sensor wechselwirkt. Es ist mit dem Geberteil verbunden. Diese Verbindung kann beispielsweise durch eine Verrastung oder durch Verkleben erfolgen.

Um eine zuverlässige Positionsbestimmung durchführen zu können, ist es bevorzugt, dass eine Länge des Geberteils im Bereich von 4 mm bis 15 mm, besonders bevorzugt im Bereich von 10 mm bis 15 mm liegt. Das Verbindungsteil ist vorzugsweise mindestens so lang wie das Geberteil und bevorzugt länger als dieses.

In einer Ausführungsform des Stellsystems ist das Geberteil ein aus dem elektrisch leitfähigen Material bestehendes kreiszylinderförmiges Geberteil. Ein solches Geberteil fungiert gegenüber dem induktiven Sensor als passives Geberteil. In einer anderen Ausführungsform weist das Geberteil einen ringförmigen magnetischen Flussleiter auf, der von einem Draht aus dem elektrisch leitfähigen Material umwickelt ist. Ein solches Geberteil fungiert gegenüber dem induktiven Sensor als aktives Geberteil.

Weiterhin ist es für eine zuverlässige induktive Messung bevorzugt, dass ein Außendurchmesser des Positionsgebers mindestens doppelt so groß, besonders bevorzugt mindestens zweieinhalb Mal so groß wie der Durchmesser des Kanals ist.

Für eine robuste Ausführung des Stellsystems ist es bevorzugt, dass der induktive Sensor auf einer Leiterplatte angeordnet ist, die zumindest teilweise von einem inneren Gehäuse umschlossen wird. Das innere Gehäuse darf nicht elektrisch leitfähig sein, um die Funktion des induktiven Sensors nicht zu beeinträchtigen und besteht deshalb insbesondere aus einem Kunststoff. Dabei wird unter einem Gehäuse sowohl eine separates Bauteil als auch eine Kunststoffumspritzung des induktiven Sensors und der Leiterplatte verstanden.

Das innere Gehäuse weist vorzugsweise eine Führung auf, die eingerichtet ist, um den Positionsgeber teilweise aufzunehmen. Hierzu hat sie insbesondere die Form einer Ausnehmung die parallel zum Aufnahmebereich verläuft und einen gekrümmten Querschnitt aufweist. Dabei ist die Führung vorzugsweise so geformt, dass der Positionsgeber das innere Gehäuse nicht berührt.

Um ein Positionsmessung im gesamten Arbeitsbereich typischer Ventile zu gewährleisten, ist es bevorzugt, dass ein Messweg des induktiven Sensors im Bereich von 3 mm bis 100 mm, besonders bevorzugt im Bereich von 40 mm bis 60 mm liegt. Aufgrund des Funktionsprinzips induktiver Sensoren ist die Länge des induktiven Sensors größer als sein Messweg und beträgt beispielsweise 150 % des Messweges.

Um die Stellung des Ventils zu regeln, weist das Stellsystem in seinem äußeren Gehäuse vorzugsweise einen elektronischen Stellungsregler auf, welcher mit dem induktiven Sensor verbunden ist. Der elektronische Stellungsregler enthält insbesondere einen Mikroprozessor. Weiterhin ist hierbei eine Stellvorrichtung vorgesehen, welche einen Anschluss zur Verbindung mit dem Ventil aufweist. Je nach Ausführung des Ventils kann die Stellvorrichtung beispielsweise eine elektrische, eine pneumatische oder eine elektropneumatische Stellvorrichtung sein.

Ein Stellungsregler kann einen externen Stellungssollwert verarbeiten. Wenn allerdings auch noch ein Prozesssollwert mit einem Prozessistwert verglichen werden soll, so ist es bevorzugt, dass der elektronische Stellungsregler mit einem Prozessregler verbunden ist, der eine Schnittstelle für einen außerhalb des äußeren Gehäuses angeordneten Sensor aufweist. Dieser Sensor kann dann den Prozessistwert bereitstellen. Der elektronische Stellungsregler und der Prozessregler können in separaten Bauteilen oder auch in einem einzigen Bauteil realisiert sein.

Weiterhin ist es bevorzugt, dass das Stellsystem eine Benutzerschnittstelle aufweist, die eingerichtet ist, um dem elektronischen Stellungsregler den Stellungssollwert zuzuführen und/oder um dem Prozessregler den Prozesssollwert zuzuführen.

In einem anderen Aspekt der Erfindung wird die Aufgabe durch ein Ventil gelöst, welches insbesondere ein Stetigventil ist, das beispielsweise als Stellventil verwendet werden kann. Dieses weist eine Schaltspindel auf, die durch den Positionsgeber eines Stellsystems gemäß dem voranstehend beschriebenen Aspekt der Erfindung geführt ist.

Es ist bevorzugt, dass die Schaltspindel und der Positionsgeber so in das Stellsystem eingesetzt sind, dass ein Abstand zwischen einer Mantelfläche des Positionsgebers und dem induktiven Sensor mindestens 0,5 mm, besonders bevorzugt mindestens 1,0 mm beträgt. Weiterhin ist es bevorzugt, dass ein Abstand zwischen dem induktiven Sensor und einem eventuell vorhandenen inneren Gehäuses, das zwischen dem induktiven Sensor und dem Positionsgeber angeordnet ist, mindestens 0,3 mm, besonders bevorzugt mindestens 0,5 mm beträgt.

Die Schaltspindel weist ein Verbindungselement auf, mit dem ein Eingreifelement des Positionsgebers eingreift. Dies ermöglicht ein exaktes Positionieren des Positionsgebers an der Schaltspindel. Das Verbindungselement ist vorzugsweise eine Ausnehmung und kann insbesondere als ringförmig um die Schaltspindel umlaufende Nut ausgeführt sein.

Insbesondere kann es sich bei dem Ventil um ein pneumatisches Ventil handeln. Dieses ist dann mit einer elektropneumatischen Stellvorrichtung des Stellsystems verbunden.

### Kurze Beschreibung der Zeichnungen

Ausführungsbeispiele der Erfindung sind in den Zeichnungen dargestellt und werden in der nachfolgenden Beschreibung näher erläutert.
- Fig. 1: zeigt eine schematische Längsschnittdarstellung eines Ventils gemäß einem Ausführungsbeispiel der Erfindung.
- Fig. 2: zeigt eine schematische Ansicht eines Positionsgebers eines Sensorelements und eines Teils einer Schaltspindel des Ventils gemäß Fig. 1 aus der dort mit II bezeichneten Blickrichtung.
- Fig. 3: zeigt einen Schnitt durch die Darstellung gemäß Fig. 2 entlang der Linie III-III.
- Fig. 4: zeigt einen Schnitt durch die Darstellung der Fig. 3 entlang der Linie IV-IV.
- Fig. 5: zeigt eine isometrische Darstellung des Positionsgebers und eines Teils der Schaltspindel gemäß Fig. 2.
- Fig. 6: zeigt eine andere isometrische Darstellung des Positionsgebers und eines Teils der Schaltspindel gemäß Fig. 2.
- Fig. 7: zeigt einen Positionsgeber und zwei Sensorelemente in einem Ausführungsbeispiel des erfindungsgemäßen Stellsystems.
- Fig. 8: zeigt ein Geberteil eines Positionsgebers in einem Ausführungsbeispiel der Erfindung.
- Fig. 9: zeigt in einem Diagramm Signale eines induktiven Sensors eines Stellsystems gemäß einem Ausführungsbeispiel der Erfindung.

### Ausführungsbeispiele der Erfindung

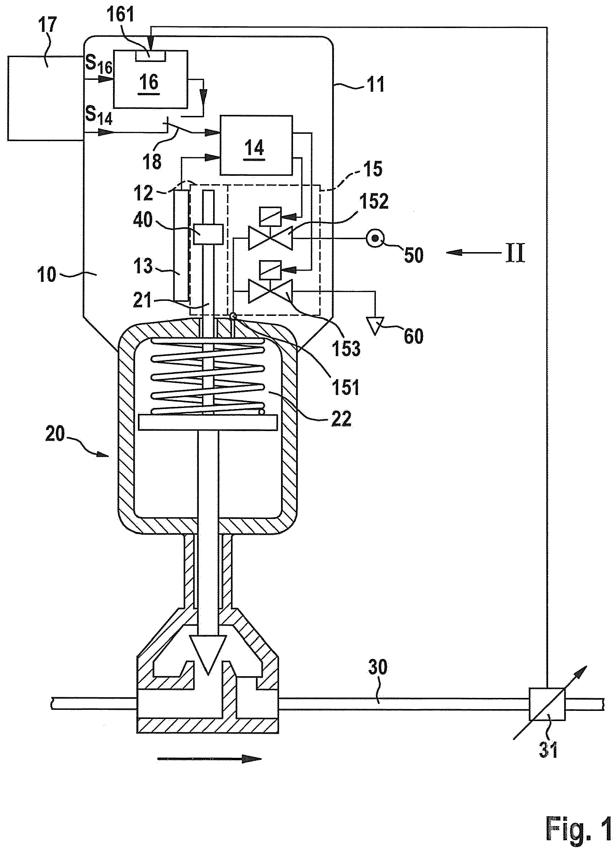

Ein Stellsystem 10 gemäß einem Ausführungsbeispiel der Erfindung, das mit einem Ventil 20 verbunden ist, ist in Fig. 1 dargestellt. Das Ventil 20 ist als pneumatisches Stellventil ausgeführt und an einer Leitung 30 angeordnet. Das Stellsystem 10 weist ein äußeres Gehäuse 11 auf. In diesem ist ein Aufnahmebereich 12 definiert, in den eine Schaltspindel 21 des Ventils 20 hineinragt. Ein Positionsgeber 40 ist an der Schaltspindel 21 angeordnet. Ein Sensorelement 13 ist parallel zum Aufnahmebereich 12 angeordnet. Es liefert Messdaten an einen elektronischen Stellungsregler 14, der eine elektropneumatische Stellvorrichtung 15 steuert. Diese weist einen Anschluss 151 an einen pneumatischen Antrieb 22 des Ventils 20 auf. Ein von dem Stellungsregler 14 gesteuertes Belüftungsventil 152 der Stellvorrichtung kann Druckluft aus einer Druckversorgung 50 durch den Anschluss 151 in den pneumatischen Antrieb 22 einleiten, um so das Ventil 20 zu schließen. Ein Entlüftungsventil 153 der Stellvorrichtung 15, welches von dem elektronischen Stellungsregler 14 gesteuert wird, kann durch den Anschluss 151 Luft aus dem pneumatischen Antrieb in einen Abluftbereich 60 entlassen. Ein Prozessregler 16 weist eine Schnittstelle 161 auf, an welche ein Sensor 31, der in der Leitung 30 stromabwärts des Ventils 20 angeordnet ist, angeschlossen werden kann. Der Sensor 31 ist vorliegend als Durchflusssensor ausgeführt. An der Außenseite des äußeren Gehäuses 11 ist eine Benutzerschnittstelle 17 angebracht, die ein Display und Tasten aufweist. Sie ermöglicht die Eingabe eines Stellungssollwertes S₁₄ und die Eingabe eines Prozesssollwertes S₁₆. Wenn der Sensor 31 nicht angeschlossen ist, so kann ein Schalter 18 im äußeren Gehäuse 11 so geschaltet werden, dass der Stellungssollwert S₁₄ dem Stellungsregler 14 zugeführt wird. Aus einem Signal des Sensorelements 13, das durch dessen induktive Wechselwirkung mit dem Positionsgeber 40 erzeugt wird, wird dann im Stellungsregler 14 eine Istposition der Schaltspindel 21 berechnet und mit dem Stellungssollwert S₁₄ verglichen. Bei einer Abweichung zwischen Istwert und Sollwert wird durch geeignete Ansteuerung der Stellvorrichtung 15 der Istwert wieder auf den Sollwert eingestellt. Ist der Sensor 31 hingegen angeschlossen, so wird der Schalter 18 so geschaltet, dass der Stellungsregler 14 ein Eingangssignal vom Prozessregler 16 erhält. Dieses wird durch Vergleich des Prozesssollwert S₁₆, der vorliegend ein Durchflusssollwert ist, mit dem vom Sensor 31 gemessenen Istwert des Durchflusses berechnet. Der berechnete Wert wird an den Stellungsregler 14 übergeben und tritt dort an die Stelle des Stellungssollwerts S₁₄.

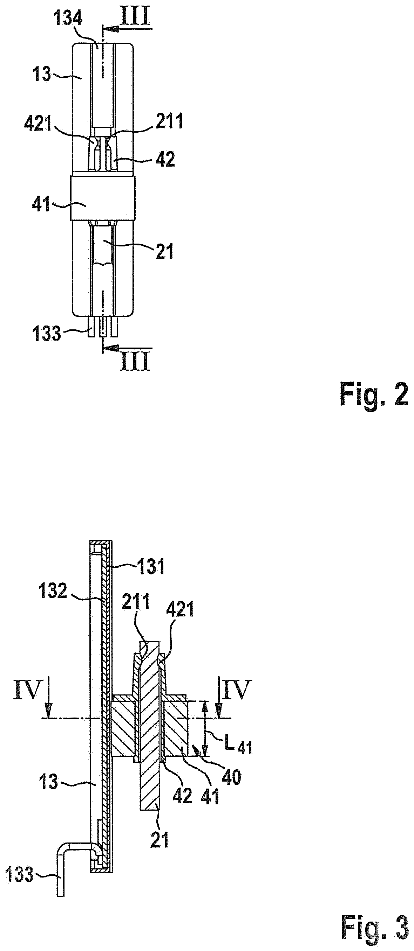

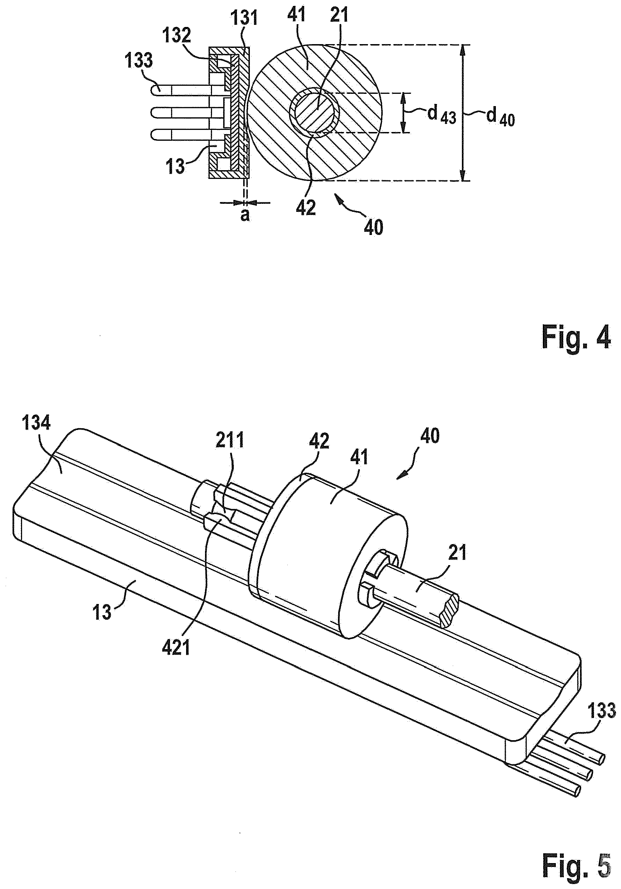

Eine exakte Positionsbestimmung der Schaltspindel 21 wird durch die induktive Wechselwirkung zwischen dem Sensorelement 13 und dem Positionsgeber 40 ermöglicht. Diese sind detailliert in den Fig. 2 bis 6 dargestellt. Das Sensorelement 13 weist ein 0,5 mm dickes inneres Gehäuse 131 aus einem Kunststoff auf, in dem ein induktiver Sensor 132 auf einer Leiterplatte mit Verbindungsleitungen 133 angeordnet ist. Diese ist mittels nicht dargestellter Bohrungen am inneren Gehäuse 131 thermisch fixiert. Der Positionsgeber 40 besteht aus einem Geberteil 41 und einem Verbindungsteil 42. Das Geberteil 41 ist vorliegend als Zylinder aus Kupfer ausgeführt, der eine Länge L₄₁ von 12,5 mm aufweist. Sein Außendurchmesser entspricht dem Außendurchmesser d₄₀ des Positionsgebers 40 und beträgt vorliegend 18 mm. Entlang der Längsachse des Geberteils 41 verläuft eine kreisförmige Bohrung, in welche das Verbindungsteil 42 eingesetzt ist. Dieses besteht aus einem Kunststoff und weist in seinem Inneren einen Kanal 43 mit einem Durchmesser d₄₃ von 4,9 mm auf. Dieser Durchmesser d₄₃ entspricht dem Außendurchmesser der Schaltspindel 21. Das Verbindungsteil erstreckt sich über die gesamte Länge L₄₁ des Geberteils 41 und auch hierüber hinaus. Dabei beträgt seine Länge 25,1 mm. Es endet in federförmigen Eingreifelementen 421, die einer ringförmig um die Schaltspindel 21 umlaufenden Nut 211 im Sinne einer Nut-Feder-Verbindung eingreifen. Auf der Seite des Positionsgebers 40, auf welcher sich die Eingreifelemente 421 befinden, ist das Verbindungsteil in einem Abschnitt im Wesentlichen auf den Außendurchmesser des Geberteils 41 verbreitert und dort mit diesem verklebt. Der Abstand zwischen der dem induktiven Sensor 132 zugewandten Mantelfläche des Positionsgebers 40, welcher der Mantelfläche des Geberteils 41 entspricht und der Oberfläche des induktiven Sensors 132 beträgt vorliegend 1,0 mm und der Abstand a zwischen der Mantelfläche und der Oberfläche des inneren Gehäuses 131 beträgt 0,5 mm. Dabei weißt das innere Gehäuse 131 eine Führung 134 auf, welche dem Positionsgeber zugewandt ist. Diese hat die Form einer Ausnehmung mit gekrümmtem Querschnitt, so dass der Abstand zwischen der Mantelfläche und dem inneren Gehäuse in radialer Richtung des Geberteils 41 im Bereich der Führung 134 konstant ist.

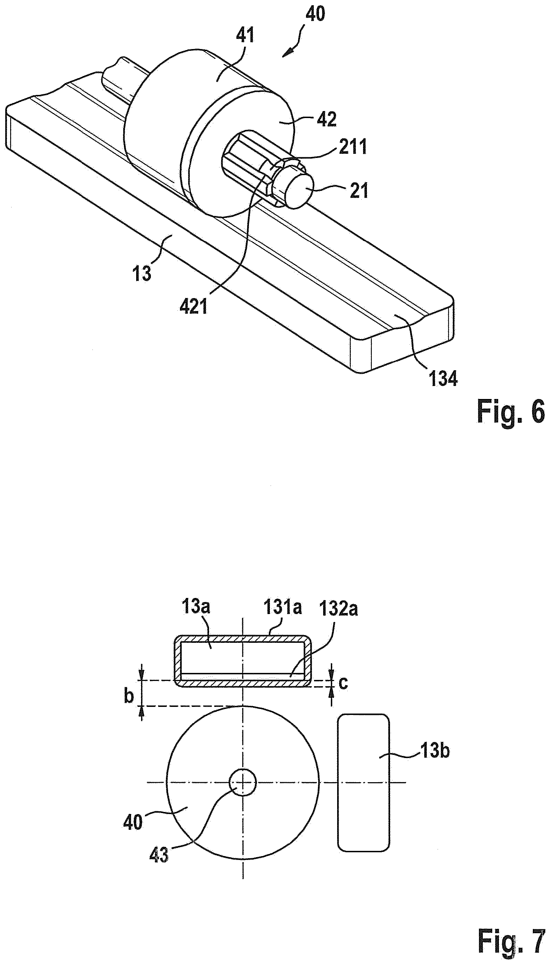

In Fig. 7 ist dargestellt, dass das Stellsystem 10 in einer anderen Ausführungsform zwei Sensorelemente 13a, 13b aufweisen kann, die beide jeweils parallel zum Aufnahmebereich 12 verlaufen, dabei aber zueinander in einem Winkel von 90 Grad angeordnet sind. Dies ermöglicht eine redundante Positionsmessung für sicherheitsrelevante Anwendungen des Ventils 20. In dieser nicht maßstabsgetreuen vereinfachten Darstellung ist außerdem gezeigt, dass der Abstand b zwischen der Mantelfläche des Positionsgebers 40 und dem induktiven Sensor 132 groß genug ist, um sowohl die Dicke c des inneren Gehäuses 131 a des Sensorelements 13a einzuschließen als auch noch eine ausreichende Einbautoleranz zu gewährleisten. Dies gilt in gleicher Weise für das zweite Sensorelement 13b.

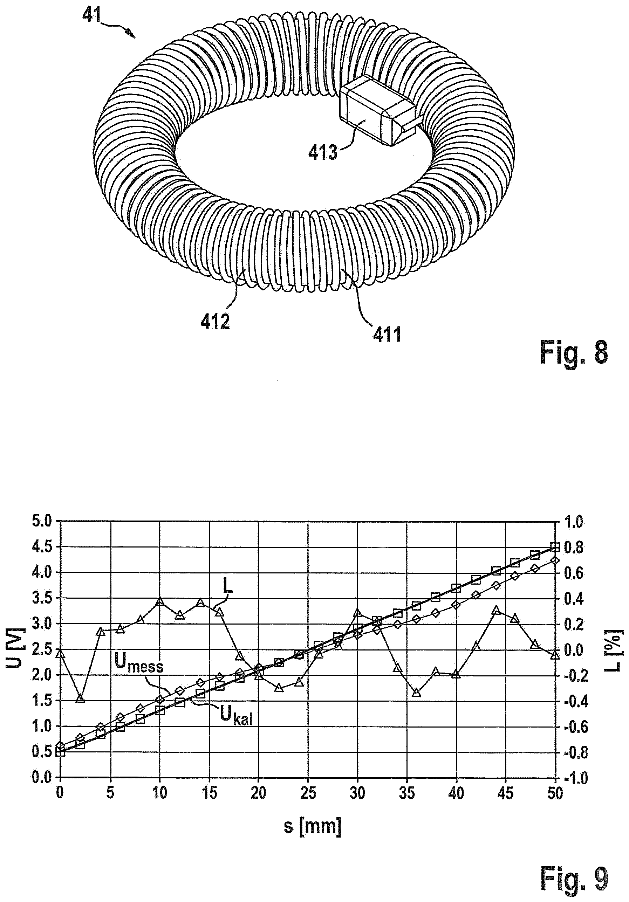

In einem alternativen Ausführungsbeispiel handelt es sich bei dem Geberteil 41 des Positionsgebers 40 nicht um einen Zylinder aus Kupfer. Wie in Fig. 8 dargestellt ist, weist das Geberteil stattdessen einen ringförmigen magnetischen Flussleiter 411 auf, der aus Ferrit besteht. Dieses ist mit einem Draht 412 aus Kupfer umwickelt. Ein Kondensator 413 ist mit dem Draht 412 in Reihe geschaltet. Dadurch bilden der Draht 412 und der Kondensator 413 einen Resonator. Dieses Geberteil 41 fungiert als aktives Geberteil, während ein Geberteil 41 aus Kupfer als passives Geberteil fungiert.

In dem in den Figuren 1 bis 6 beschriebenen Ausführungsbeispiel weist der induktive Sensor 132 einen Messweg s entlang dem Aufnahmebereich 12 von 50 mm und eine Länge von 78 mm auf. In Fig. 9 ist über diesen Messweg s beispielhaft der Verlauf der gemessenen Spannung Uₘₑₛₛ und der Verlauf der kalibrierten Spannung Uₖₐₗ aufgetragen. Weiterhin ist der Verlauf der Linearität L über den Messweg s dargestellt. Nach der Kalibrierung ergibt sich lediglich eine Nicht-Linearität von ca. ± 0,4 %.

Das Stellsystem 10 und das Ventil 20 können gemeinsam in der dargestellten Weise hergestellt werden. Es ist aber auch möglich, ein Ventil 20 nachträglich in dem Stellsystem 10 nachzurüsten. Hierzu wird der Positionsgeber 40 an der Schaltspindel 21 angebracht, indem die Schaltspindel 21 durch den Kanal 43 geschoben wird, bis die Eingreifelemente 421 in die Ausnehmung 211 einrasten. Dann wird das Stellsystem so auf das Ventil 20 aufgesetzt, dass die Schaltspindel 21 in den Aufnahmebereich 12 hineinragt und der pneumatische Antrieb 22 des Ventils 20 wird an den Anschluss 151 des Stellsystems angeschlossen. Wenn in der Leitung 30 ein Sensor 31 vorhanden ist, so wird dieser an die Schnittstelle 161 angeschlossen. Anschließend ist das Stellsystem 10 einsatzbereit. Es besteht keine Gefahr einer Fehljustierung des Positionsgebers 40 bei der Montage. Sobald dieser einmal seine durch die Ausnehmung 211 definierte Position entlang der Längsachse der Schaltspindel 21 erreicht hat, kann er vielmehr nach Belieben um die Schaltspindel 21 herum verdreht werden, ohne dass dies die Positionsmessung mittels des induktiven Sensors 132 beeinträchtigen würde.

## Patentansprüche

1. Stellsystem (10) für ein Ventil (20), aufweisend
- ein äußeres Gehäuse (11),
- einen in dem äußeren Gehäuse (11) verlaufenden Aufnahmebereich (12) zur Aufnahme einer Schaltspindel (21) des Ventils (20),
- mindestens einen parallel zu dem Aufnahmebereich (12) verlaufenden induktiven Sensor (132), und
- mindestens einen im Wesentlichen kreiszylinderförmigen Positionsgeber (40) der ein elektrisch leitfähiges Material aufweist und der einen entlang seiner Längsachse verlaufenden Kanal (43) aufweist, der zur Aufnahme der Schaltspindel (21) des Ventils (20) eingerichtet ist,
**dadurch gekennzeichnet, dass** der Positionsgeber (40) ein Geberteil (41) aufweist durch welches entlang seiner Längsachse ein Verbindungsteil (42) hindurchgeführt ist, das den Kanal (43) umgibt und das mindestens ein Eingreifelement (421) aufweist.

2. Stellsystem (10) nach Anspruch 1, **dadurch gekennzeichnet, dass** eine Länge (L₄₁) des Geberteils (41) im Bereich von 4 mm bis 15 mm liegt.

3. Stellsystem (10) nach Anspruch 1 oder 2, **dadurch gekennzeichnet, dass** das Geberteil (41) ein aus dem elektrisch leitfähigen Material bestehendes kreiszylinderförmiges Geberteil (41) ist.

4. Stellsystem (10) nach Anspruch 1 oder 2, **dadurch gekennzeichnet, dass** das Geberteil (41) einen ringförmigen magnetischen Flussleiter (411) aufweist, der von einem Draht (412) aus dem elektrisch leitfähigen Material umwickelt ist.

5. Stellsystem (10) nach einem der Ansprüche 1 bis 4, **dadurch gekennzeichnet, dass** ein Außendurchmesser (d₄₀) des Positionsgebers (40) mindestens doppelt so groß ist, wie ein Durchmesser (d₄₃) des Kanals (43).

6. Stellsystem (10) nach einem der Ansprüche 1 bis 5, **dadurch gekennzeichnet, dass** der induktive Sensor (132) auf einer Leiterplatte angeordnet ist, die zumindest teilweise von einem inneren Gehäuse (131) umschlossen wird.

7. Stellsystem (10) nach Anspruch 6, **dadurch gekennzeichnet, dass** das innere Gehäuse (13) eine Führung (134) aufweist, die eingerichtet ist, um den Positionsgeber (40) teilweise aufzunehmen.

8. Stellsystem (10) nach einem der Ansprüche 1 bis 7, **dadurch gekennzeichnet, dass** der induktive Sensor (132) einen Messweg (s) im Bereich von 40 mm bis 60 mm aufweist.

9. Stellsystem (10) nach einem der Ansprüche 1 bis 8, in dem äußeren Gehäuse (11) weiterhin aufweisend
- einen elektronischen Stellungsregler (14), welcher mit dem induktiven Sensor (132) verbunden ist, und
- eine Stellvorrichtung (15), welche einen Anschluss (151) zur Verbindung mit dem Ventil (20) aufweist.

10. Stellsystem (10) nach Anspruch 9, **dadurch gekennzeichnet, dass** der elektronisch Stellungsregler (14) mit einem Prozessregler (16) verbunden ist, der eine Schnittstelle (161) für einen außerhalb des äußeren Gehäuses (11) angeordneten Sensor (31) aufweist.

11. Stellsystem (10) nach Anspruch 9 oder 10, weiterhin aufweisend eine Benutzerschnittstelle (17), die eingerichtet ist, um dem elektronischen Stellungsregler (14) eine Stellungssollwert (S₁₄) zuzuführen und/oder um einem Prozessregler (16) einen Prozesssollwert (S₁₆) zuzuführen.

12. Ventil (20) mit einem Stellsystem nach einem der Ansprüche 1-11 , aufweisend eine Schaltspindel (21), die durch den Positionsgeber (40) des Stellsystems (10) geführt ist, wobei die Schaltspindel (21) ein Verbindungselement aufweist, mit dem ein Eingreifelement (421) des Positionsgebers (40) eingreift.

13. Ventil (20) nach Anspruch 12, **dadurch gekennzeichnet, dass** ein Abstand (b) zwischen einer Mantelfläche des Positionsgebers (40) und dem induktiven Sensor (132) mindestens 0,5 mm beträgt.

14. Ventil (20) nach Anspruch 12 oder 13, **dadurch gekennzeichnet, dass** es ein pneumatisches Ventil (20) ist, und mit einer elektropneumatischen Stellvorrichtung (15) des Stellsystems (10) verbunden ist.

## Claims

1. Actuating system (10) for a valve (20), having
- an outer housing (11),
- a receiving region (12) running in the outer housing (11) for receiving a switching spindle (21) of the valve (20),
- at least one inductive sensor (132) running in parallel to the receiving region (12), and
- at least one substantially circular cylindrical position encoder (40) which has an electrically conductive material and which has a channel (43) running along its longitudinal axis, said channel (43) being equipped to receive the switching spindle (21) of the valve (20),
**characterised in that** the position encoder (40) has an encoder part (41) through which a connection part (42) is guided along its longitudinal axis, said connection part (42) surrounding the channel (43) and having the at least one engagement element (421).

2. Actuating system (10) according to claim 1, **characterised in that** a length (L₄₁) of the encoder part (41) is in the range of from 4 mm to 15 mm.

3. Actuating system (10) according to claim 1 or 2, **characterised in that** the encoder part (41) is a circular cylindrical encoder part (41) consisting of the electrically conductive material.

4. Actuating system (10) according to claim 1 or 2, **characterised in that** the encoder part (41) has an annular magnetic flux conductor (411) which is wrapped with a wire (412) made of the electrically conductive material.

5. Actuating system (10) according to one of claims 1 to 4, **characterised in that** an outer diameter (d₄₀) of the position encoder (40) is at least twice as large as a diameter (d₄₃) of the channel (43).

6. Actuating system (10) according to one of claims 1 to 5, **characterised in that** the inductive sensor (132) is arranged on a printed circuit board which is at least partially enclosed by an inner housing (131).

7. Actuating system (10) according to claim 6, **characterised in that** the inner housing (13) has a guide (134) equipped to partially receive the position encoder (40).

8. Actuating system (10) according to one of claims 1 to 7, **characterised in that** the inductive sensor (132) has a measuring path (s) in the range of from 40 mm to 60 mm.

9. Actuating system (10) according to one of claims 1 to 8, further having, in the outer housing (11),
- an electronic position regulator (14) which is connected to the inductive sensor (132), and
- an actuating device (15) which has a port (151) for connecting to the valve (20).

10. Actuating system (10) according to claim 9, **characterised in that** the electronic position regulator (14) is connected to a process regulator (16) which has an interface (161) for a sensor (31) arranged outside the outer housing (11).

11. Actuating system (10) according to claim 9 or 10, further comprising a user interface (17) which is equipped to supply a position setpoint (S₁₄) to the electronic position regulator (14) and/or to supply a process setpoint (S₁₆) to a process regulator (16).

12. Valve (20) with a actuating system according to one of claims 1 to 11, having a switching spindle (21) which is guided by the position encoder (40) of the actuating system (10), wherein the switching spindle (21) has a connecting element with which an engagement element (421) of the position encoder (40) engages.

13. Valve (20) according to claim 12, **characterised in that** a distance (b) between a shell surface of the position encoder (40) and the inductive sensor (132) is at least 0.5 mm.

14. Valve (20) according to claim 12 or 13, **characterised in that** it is a pneumatic valve (20) and is connected to an electropneumatic actuating device (15) of the actuating system (10).

## Revendications

1. Système de réglage (10) pour une vanne (20), présentant
- un boîtier extérieur (11),
- une zone de réception (12) s'étendant dans le boîtier extérieur (11) pour la réception d'une broche de commutation (21) de la vanne (20),
- au moins un capteur inductif (132) s'étendant parallèlement à la zone de réception (12), et
- au moins un indicateur de position (40) essentiellement en forme de cylindre circulaire, qui présente un matériau électriquement conducteur et qui présente un canal (43), s'étendant le long de son axe longitudinal, qui est prévu pour l'admission de la broche de commutation (21) de la vanne (20),
**caractérisé en ce que** l'indicateur de position (40) présente une partie d'indication (41) à travers laquelle une partie de liaison (42), qui entoure le canal (43), est menée le long de son axe longitudinal, et présente l'au moins un élément d'insertion (421).

2. Système de réglage (10) selon la revendication 1, **caractérisé en ce qu'**une longueur (L₄₁) de la partie d'indication (41) se situe dans la plage de 4 mm à 15 mm.

3. Système de réglage (10) selon la revendication 1 ou la revendication 2, **caractérisé en ce que** la partie d'indication (41) est une partie d'indication (41) en forme de cylindre circulaire constituée d'un matériau électriquement conducteur.

4. Système de réglage (10) selon la revendication 1 ou la revendication 2, **caractérisé en ce que** la partie d'indication (41) présente un dispositif de guidage du flux (411) magnétique en forme d'anneau qui est entouré par un fil (412) à base du matériau électriquement conducteur.

5. Système de réglage (10) selon l'une des revendications 1 à 4, **caractérisé en ce qu'**un diamètre extérieur (d₄₀) de l'indicateur de position (40) est au moins deux fois aussi grand qu'un diamètre (d₄₃) du canal (43).

6. Système de réglage (10) selon l'une des revendications 1 à 5, **caractérisé en ce que** le capteur inductif (132) est disposé sur un circuit imprimé qui est au moins partiellement entouré par un boîtier intérieur (131).

7. Système de réglage (10) selon la revendication 6, **caractérisé en ce que** le boîtier intérieur (13) présente un dispositif de guidage (134) qui est prévu pour recevoir partiellement l'indicateur de position (40).

8. Système de réglage (10) selon l'une des revendications 1 à 7, **caractérisé en ce que** le capteur inductif (132) présente un trajet de mesure (s) dans la plage de 40 mm à 60 mm.

9. Système de réglage (10) selon l'une des revendications 1 à 8, présentant en outre, dans le boîtier extérieur (11),
- un régulateur de position électronique (14), lequel est relié avec le capteur inductif (132), et
- un dispositif de réglage (15), lequel présente un raccord (151) pour la liaison avec la vanne (20).

10. Système de réglage (10) selon la revendication 9, **caractérisé en ce que** le régulateur de position (14) est relié de manière électronique avec un régulateur de processus (16) qui présente une interface (161) pour un capteur (31) disposé à l'extérieur du boîtier extérieur (11).

11. Système de réglage (10) selon la revendication 9 ou la revendication 10, présentant en outre une interface utilisateur (17) qui est prévue pour donner au régulateur de position (14) électronique une valeur nominale de position (S₁₄), et/ou pour donner à un régulateur de processus (16) une valeur souhaitée de processus (S₁₆).

12. Vanne (20) dotée d'un système de réglage selon l'une des revendications 1 à 11, présentant une broche de commutation (21) qui est menée à travers l'indicateur de position (40) du système de réglage (10), où la broche de commutation (21) présente un élément de liaison avec lequel un élément d'insertion (421) de l'indicateur de position (40) est en prise.

13. Vanne (20) selon la revendication 12, **caractérisée en ce qu'**une distance (b) entre une surface d'enveloppe de l'indicateur de position (40) et le capteur inductif (132) est d'au moins 0,5 mm.

14. Vanne (20) selon la revendication 12 ou la revendication 13, **caractérisée en ce qu'**elle est une vanne (20) pneumatique, et est reliée avec un dispositif de réglage (15) électropneumatique du système de réglage (10).
